# EUROPÄISCHE PATENTSCHRIFT

(11) **EP 0 765 447 B1**
(45) Veröffentlichungstag und Bekanntmachung des Hinweises auf die Patenterteilung: **18.07.2001**
(21) Anmeldenummer: 95921787.8
(22) Anmeldetag: 30.05.1995
(51) Int. Cl.: F16J 15/34

(54) **GLEITRINGDICHTUNG UND VERFAHREN ZUM HERSTELLEN DERGLEICHEN**
SLIDE-RING PACKING AND METHOD FOR MANUFACTURING THE SAME
BAGUE D'ETANCHEITE GLISSANTE ET SON PROCEDE DE FABRICATION

(30) Priorität: 03.06.1994 DE 4419538
(43) Veröffentlichungstag der Anmeldung: 02.04.1997
(73) Patentinhaber: Carl Freudenberg, 69469 Weinheim (DE)
(72) Erfinder: GÜNTHER, Hans-Werner, D-31623 Drakenburg (DE); JANSSEN, Dieter, D-21698 Harsefeld (DE)
(86) Internationale Anmeldenummer: EP9502061
(87) Internationale Veröffentlichungsnummer: WO9533940

(56) Entgegenhaltungen:
- GB-A- 2 098 675
- US-A- 3 970 320
- PATENT ABSTRACTS OF JAPAN vol. 10 no. 176 (M-491) [2232] ,20.Juni 1986 & JP,A,61 024878 (EAGLE IND CO) 3.Februar 1986,

## Beschreibung

Es ist bekannt (Ztschr. PROCESS 1994 Seite 23-26), daß man durch hochgenaue, flächenparallele Bearbeitung der zusammenwirkenden Gleitflächen der Gleitringe einer Gleitringdichtung minimale Leckage weit unter 1 g/h erzielen kann. Jedoch ist auch bekannt, daß man sich damit in bislang unkontrollierter Weise von hydrodynamischen Schmierverhältnissen entfernt und zumindest partiellen Trockenlauf in Kauf nimmt, der zur Zerstörung der Gleitflächen führen kann. In der Praxis nimmt man daher, um nicht unkontrolliertes, vorzeitiges Versagen der Dichtung gewärtigen zu müssen, größere Leckraten in Kauf, die größeren Spaltweiten entsprechen. Diese größeren Spaltweiten können als beabsichtigte oder unbeabsichtigte Abweichungen der Gleitflächenform von der ebenen Gestalt in Umfangsrichtung (Umfangswelligkeit) herrühren.

Es ist bekannt, daß parallele Dichtflächen zwar zu geringster Leckage führen, aber schwere Schäden an den Gleitflächen nach sich ziehen können. Das gilt auch für manche Gleitringdichtungen mit gemäßigtem V-Spalt.

Die Erfindung hat erkannt, daß dies in vielen Fällen durch Kavitation begründet ist. Die selbst bei guter Bearbeitungsgenauigkeit unvermeidliche Umfangswelligkeit der zusammenwirkenden Dichtflächen führt dazu, daß zwischen den Dichtflächen Räume eingeschlossen werden, deren Volumen mit der Umdrehungszahl oder gar rascher wechselt. Dies ist solange unkritisch, als infolge weiten Dichtspalts diese Räume über relativ große Querschnitte mit anderen Dichtspaltvolumina oder Räumen außerhalb des Dichtspalts in Verbindung stehen, so daß der Zu- und Abfluß des flüssigen Mediums ohne Verdampfung gewährleistet ist. Je enger der Spalt wird, um so geringer werden jedoch diese Ab- und Zuflußquerschnitte, während - gleiche Welligkeit vorausgesetzt - die Differenzvolumina gleich bleiben.

Bekannt ist eine gattungsbildende Gleitringdichtung (US-A3 970 320), deren mit der Welle umlaufender Gleitring aus Hartstoff und deren stationärer Gleitring aus Kohle besteht. Der stationäre Gleitring ist mit Kühlbohrungen versehen, die im Hochdruckbereich seiner Gleitfläche infolge der unterschiedlichen thermischen Dehnung vertiefte Bereiche schaffen sollen. Im übrigen sollen die Gleitflächen optisch eben sein, d.h., daß die zulässige Abweichung der Gleitflächen von der absolut ebenen Gestalt im Bereich kleiner Gleitringdurchmesser nicht größer ist als eine Heliumlicht-Bandbreite und bei größeren Durchmessern bis zu 9 Heliumlicht-Bandbreiten. Das entspricht 0,3 bis 3µ. Die Mindestspaltweite ist infolge der Addition der Unebenheiten beider Gleitflächen größer. Auch muß in Betracht gezogen werden, daß die thermische Verformung im Bereich der Kühlbohrung nicht nur zu örtlich begrenzten Vertiefungen in ihrer unmittelbaren Nachbarschaft führt, sondern daß darüber hinaus auch mit stärkeren Verwerfungen zu rechnen ist, die gleichfalls im Sinne einer Vergrößerung der Spaltweite wirken. Es ist deshalb damit zu rechnen, daß auch im niederdruckseitigen Randbereich im wesentlichen hydrodynamische Schmierverhältnisse herrschen durch die die Gleitflächen voneinander abgehoben werden. Darauf deutet die Beobachtung hin, daß bei thermischer Verformung der Kontaktfläche die Leckrate zunimmt. Dies gilt um so mehr, als der die Kühlbohrung enthaltende Gleitring aus Kohle bestehen soll und daher im Verhältnis zu dem anderen, aus Hartstoff bestehenden Gleitring einem stärkeren Verschleiß unterworfen ist, der die ursprüngliche Formgebung in Frage stellt. Erfahrungsgemäß ist bei einer derartigen Dichtung mit einer nicht unbeträchtlichen Leckrate zu rechnen.

Ausgehend von diesem Stand der Technik, der im Oberbegriff des Anspruchs 1 genannt ist, liegt der Erfindung die Aufgabe zugrunde, die Leckrate beträchtlich zu vermindern, ohne dadurch die Zuverlässigkeit der Dichtung unberechenbar zu beeinträchtigen.

Die erfindungsgemäße Lösung besteht in den kennzeichnenden Merkmalen des Anspruchs 1. Ein Verfahren, das zu diesen Merkmalen führt, ist in Anspruch 11 angegeben.

Die kennzeichnenden Merkmale des Anspruchs 1 besagen, daß der Dichtspalt V-Form hat oder im Extremfall parallel begrenzt ist, nicht aber A-Form aufweist. Im niederdruckseitigen Rand schließen die Gleitflächen einen extrem engen Dichtspalt von nicht mehr als 0,2µ Weite ein. Da die minimale Weite auch im druckseitig gelegenen Teil des Dichtspalts nicht kleiner ist, ist Gewähr dafür vorhanden, daß der niederdruckseitige Rand die engste Stelle des Dichtspalts bildet. Im druckseitigen Teil des Dichtspalts ist eine Umfangswelligkeit vorgesehen, die für hydrodynamisch günstige Verhältnisse sorgt. Dadurch, daß die Abweichungen einer der beiden Gleitflächen von der ebenen Form nicht größer als 0,1µ sind, wird bewirkt, daß die periodische Änderung der zwischen den beiden Gleitflächen im Randbereich eingeschlossenen Volumina entfällt oder im Rahmen der Fertigungsgenauigkeit minimiert wird. Entsprechend beseitigt oder verringert werden auch die periodischen Druckwechsel, die zu periodischer Verdampfung und Kondensation mit entsprechenden Kavitationsfolgen führen können.

Es hat sich gezeigt, daß eine Gleitringdichtung mit derart geformten und hochgenau bearbeiteten Gleitflächen zu einer extrem geringen Leckrate und dennoch langer Lebensdauer führt.

Wenn im vorliegenden Zusammenhang von den Gleitringen gesprochen wird, so sind damit der drehfest mit der Welle verbundene Gleitring sowie der mit dem Gehäuse verbundene, *oft* als Gegenring bezeichnete Ring gemeint. Wenn in bezug auf den niederdruckseitigen Rand von ebener Gestalt gesprochen wird, so ist damit vereinfachend eine Form gemeint, die in Umfangsrichtung möglichst geringe Abweichungen von der Rotationsform zeigt, während sie in radialer Richtung zwar im wesentlichen eben ist, was aber eine geplante Abweichung von der ebenen Gestalt, beispielsweise im Sinne einer geringen Konizität nicht ausschließen soll. Mit der Abstimmung der Formgebung der Gleitflächen und ihrer Betriebsverformung ist gemeint, daß den Gleitflächen im entspannten Zustand eine solche Form gegeben wird, daß sie im Betriebszustand, nachdem die Betriebsverformung eingetreten ist, die gewünschte Gestalt hat. Mit relativer Formgebung ist gemeint, daß die Gestalt der einen Gleitfläche in der Regel in Relation zu derjenigen der gegenüberliegenden Gleitfläche gesehen werden muß, nämlich insbesondere bei der angestrebten Gestalt der Gleitflächen in radialer Querschnittsrichtung.

Die erfindungsgemäß geforderte, hochgenaue Gleitflächenqualität kann durch Läppen erzielt werden.

Damit die geringe niederdruckseitige Spaltweite zustande kommen kann, ist auch die zweite Gleitfläche im niederdruckseitigen Randbereich im wesentlichen in Umfangsrichtung eben. Ihre Abweichungen von der (in Umfangsrichtung) ebenen Form sind nicht größer als 0,15 µ .

Der übrige Bereich des Dichtspalts,·also druckseitig von dem niederdruckseitigen Rand, ist so ausgeführt, daß dort die Spaltweite auch an den engsten Stellen nicht kleiner ist als im niederdruckseitigen Rand, während dazwischen Bereiche mit größerer Spaltweite liegen, so daß sich über den Umfang eine Welligkeit ergibt, die die Hydrodynamik bestimmt. Dabei sollte die Spaltweite in denjenigen Bereichen, in denen sich die Gleitflächen am nächsten kommen, über den Radius etwa konstant sein. Mit anderen Worten ausgedrückt, soll es Bereiche geben, in welchen die beiden Gleitflächen zueinander im Betriebszustand durchgehend von der Druckseite bis zur Niederdruckseite in Radiusrichtung etwa parallel sind oder nur eine minimale V-Form haben, während in den dazwischen liegenden Bereichen die V-Form stärker ausgeprägt ist. Dies führt dazu, daß die im hydrodynamisch wirksamen Teil des Dichtspalts einander nächstkommenden Bereiche nach einer gewissen Einlaufzeit, in welcher die niederdruckseitigen Randstreifen durch Festkörperkontakt ihre Endform erhalten haben, eine Tragfunktion ausüben, in der sie den gegenseitigen Abstand der Gleitflächen voneinander bestimmen oder, anders ausgedrückt, bei einem gegen Null gehenden Abstand der niederdruckseitigen Randstreifen der Gleitflächen diese durch Tragfunktion entlasten, wodurch deren weiterer Verschleiß minimiert wird.

Die druckseitig des niederdruckseitigen Randes dafür erforderliche Umfangswelligkeit ist gering. Sie kann unter 1 µ, vorzugsweise unter 0,5 µ liegen.

Es wäre schwierig, die extrem geringen Abmessungsunterschiede, die die Gleitflächen in verschiedenen Bereichen gemäß der Erfindung im Betriebszustand haben sollen, unmittelbar fertigungstechnisch zu erzeugen. Jedoch lassen sich ebene oder leicht ballige oder hohle Flächenformen mit extrem geringer Umfangswelligkeit durch Läppen herstellen. Die erfindungsgemäße Abstimmung mit den druck- bzw. temperaturbedingten Verformungen erbringt sodann die im Betriebszustand gewünschte Umfangswelligkeit im druckseitigen Bereich der Gleitfläche bzw. Gleitflächen. Zu diesem Zweck ist wenigstens einer der beiden Gleitringe mit Einrichtungen zur über den Umfang ungleichen Wärmeabfuhr ausgerüstet. Zu diesem Zweck können bereichsweise Wärmedämmeinrichtungen vorgesehen werden oder Einrichtungen, die die Wärmeübertragung auf das umgebende Medium erleichtern. Als Wärmedämmeinrichtung sind bereits bekannte Mitnehmerklauen geeignet, die den Gleitring - wie in dem später erläuterten Ausführungsbeispiel, auf Teilen des Umfangs umgeben. Damit sich diese Einrichtungen auf die Form der Gleitfläche hinreichend auswirken können, sollten die in demselben Sinne wirkenden (also beispielsweise wärmedämmenden) Einrichtungen sich insgesamt über mindestens etwa ein Drittel und einzeln über je mindestens etwa ein Zehntel des Umfangs erstrecken. Gute Ergebnisse werden erreicht, wenn zwei oder drei Wärmedämmstrecken über den Umfang gleichmäßig verteilt sind, deren Länge sich jeweils über ein Viertel bzw. ein Sechstel der Gesamtumfangslänge erstreckt.

Entsprechendes gilt für Einrichtungen zur über den Umfang ungleichmäßigen Abstützung des die Dichtfläche bildenden Ringteils gegenüber der abzudichtenden Druckdifferenz.

Nach einem besonderen Merkmal der Erfindung kann vorgesehen sein, daß die betriebliche Druck- und Temperaturverformung gegensinnig auf die Neigung der Gleitfläche gegenüber der Radiusrichtung einwirken. Dadurch kann erreicht werden, daß der Gleitflächenwinkel gegenüber der Radiusrichtung bei Änderung des abzudichtenden Drucks etwa gleich bleibt. Dies hängt damit zusammen, daß die Wärmeleistung im Dichtspalt und damit die Temperaturverteilung im Gleitring von der abzudichtenden Druckdifferenz abhängt und daß sowohl die Druckdifferenz als auch das im Gleitring im Meridionalschnitt herrschende Temperaturfeld den Verstülpungszustand des Rings beeinflussen. Dies ist unabhängig von demjenigen Druck- bzw. Temperatureinfluß, der die unregelmäßige Verformung der Gleitfläche über den Umfang zwecks hydrodynamischer Welligkeit im druckseitigen Spaltbereich verursacht.

Porigkeit des Ringwerkstoffs wird im allgemeinen als vorteilhaft angesehen, weil dadurch eine gewisse Hydrodynamisierung bewirkt wird. Auch können die Poren Gleitmittel speichern und dadurch die Notlaufeigenschaften verbessern. Wenn man sich jedoch vor Augen führt, daß übliche Porengrößen bei Hartwerkstoffen, wie sie für Gleitringe verwendet werden (beispielsweise Siliciumcarbid) in der Größenordnung mehrerer Mikrometer liegen und also ein Vielfaches von dem betragen, was als Spaltweite im niederdruckseitigen Randbereich angestrebt wird, wird man leicht einsehen, daß dadurch die hydrodynamischen und tribologischen Verhältnisse verfälscht werden können. Die Erfindung sieht es daher als vorteilhaft an, wenn die mittlere Porengröße unter 2 µ, vorzugsweise unter 1,5 µ liegt.

Ein Verfahren zum Herstellen der erfindungsgemäßen Dichtung zeichnet sich dadurch aus, daß der betriebliche Stülpwinkel der Gleitfläche in denjenigen Umfangsbereichen, in denen die Gleitfläche druckseitig der Gegenfläche am nächsten kommt, festgestellt und die Gleitfläche mindestens etwa diesen Winkel im Verhältnis zur Gegengleitfläche kompensierend vorbearbeitet wird. Mit anderen Worten soll angestrebt werden, daß die Gleitfläche des betrachteten Gleitrings im Verhältnis zur Gegenfläche in denjenigen Bereichen zu dieser etwa parallel ist, in denen sie im druckseitigen Spaltbereich am weitesten zur Gegenfläche vorragt. Dies gilt unbeschadet der Bedingung, daß die beiden Gleitflächen sich im Bereich des niederdruckseitigen Randbereichs am nächsten kommen sollen.

Die Erfindung wird im folgenden näher unter Bezugnahme auf die Zeichnung erläutert, die ein vorteilhaftes Ausführungsbeispiel veranschaulicht. Darin zeigen:
- Fig.1: eine perspektivische, teilweise geschnittene Seitenansicht der gesamten Gleitringdichtung,
- Fig.2 u.3: Teilschnitte durch den Gleitring in unterschiedlichen Umfangsbereichen,
- Fig. 4: eine Axialansicht auf den Gleitring und dessen Mitnehmer und
- Fig. 5: eine vergrößerte Abwicklungsdarstellung der Gleitfläche des Gleitrings.

Die Gleitringdichtung umfaßt einen an der Welle drehfest angeordneten Haltering 1, an dem sich eine Axialfeder 2 abstützt, die den eigentlichen Gleitring 3 gegen den gehäusefesten Gegenring 4 drückt, der im vorliegenden Zusammenhang gleichfalls verallgemeinernd als Gleitring bezeichnet wird. Der Gleitring 3 ist in bekannter Weise bei 5 gegen die Welle abgedichtet und schließt mit dem Gegenring 4 den Dichtspalt 6 ein. Von dem Haltering 1 erstrecken sich an zwei gegenüberliegenden Umfangsstellen Axialarme 7, die zusammen mit Umfangserhöhungen 8 bzw. niedrigeren Umfangsteilen 9 des Gleitrings 3 als Mitnehmer wirken.

Die an der Bildung des Dichtspalts 6 beteiligte, stirnseitige Dichtfläche des Gegenrings 4 wird im folgenden als plan vorausgesetzt. Sie ist geläppt und hat eine Welligkeitsamplitude von weniger als 0,1 µ. Sie kann in bezug auf die Achse der Dichtung auch leicht ballig oder konkav geschliffen sein. Wenn bei der Beschreibung der damit zusammenwirkenden Gleitfläche 10 des Gleitrings 3 der Begriff "eben" benutzt wird, so ist dieser im Falle eines balligen bzw. hohlen Schliffs der Gegendichtfläche in bezug auf die Radialrichtung entsprechend abzuwandeln.

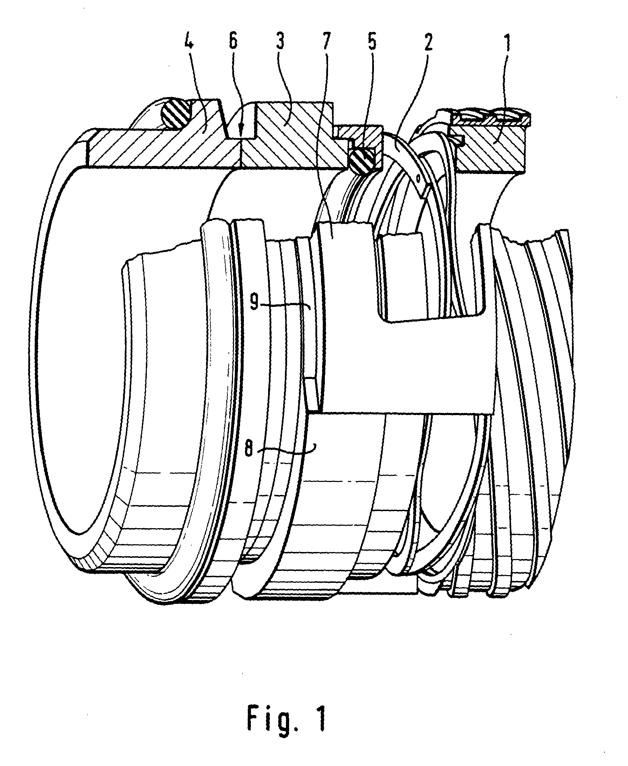

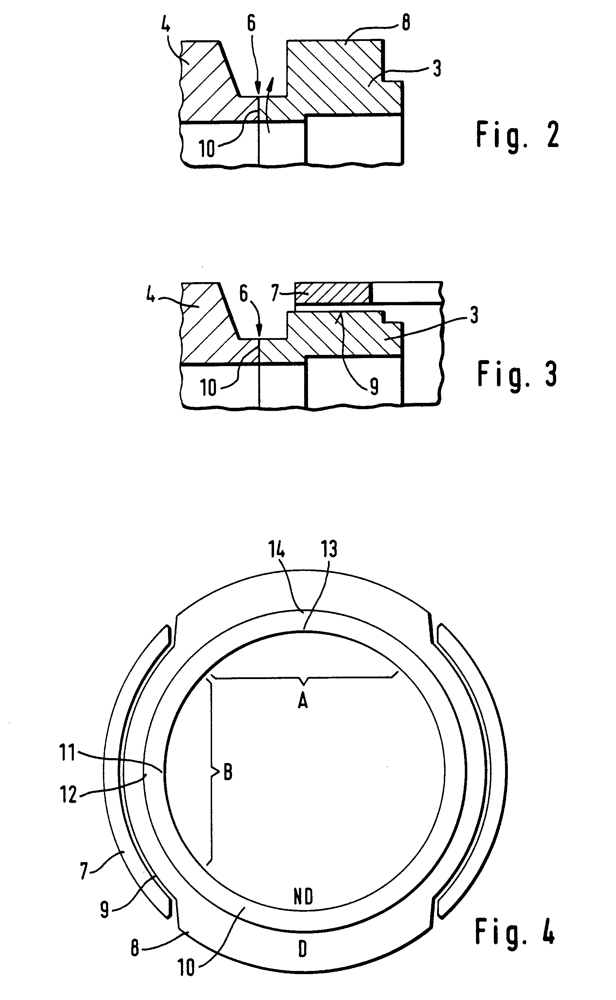

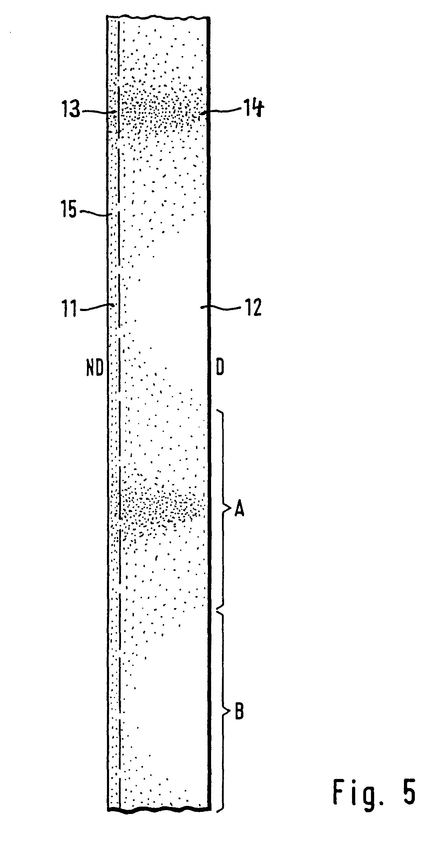

Die Schnittdarstellung in Fig.2 entspricht im wesentlichen derjenigen in Fig.1. sie zeigt denjenigen Bereich, in welchem der Umfang des Gleitrings 3 zwischen den Mitnehmern 7 entsprechend erhöht ausgebildet ist. In Fig.4 ist dieser Umfangsbereich mit dem Buchstaben A bezeichnet. Fig.3 zeigt den entsprechenden Schnitt in dem Umfangsbereich B unterhalb des Mitnehmers 7. Beim Vergleich der Figuren 2 und 3 erkennt man leicht, daß die Wärmeabfuhr vom Gleitring 3 im Abschnitt A leichter stattfindet als im Bereich B, wo der Gleitring 3 durch den Mitnehmer 7 und die dazwischen befindliche Mediumsschicht abgeschirmt ist.

Während des Betriebs entsteht im Dichtspalt 6 Wärme, die in die beiden Gleitringe abgeführt und von diesen auf die Umgebung übertragen wird. Bezüglich des Gleitrings 4 sei hier einfachheitshalber vorausgesetzt, daß dieser dadurch keine Verformung erleidet. Da bei ihm die Wärmeabfuhr über den Umfang gleichmäßig stattfindet, wird jedenfalls durch die Temperaturbeanspruchung keine über den Umfang ungleiche Verformung hervorgerufen. Er läßt sich daher so vorbearbeiten, daß er im Betriebszustand eben ist bzw. bei der Bemessung des anderen Gleitrings 3 läßt sich eine etwaige, umfangskonstante Abweichung von der ebenen Gestalt leicht berücksichtigen.

Hingegen bewirkt die Wärmeabfuhr durch den Gleitring 3 in den Umfangsabschnitten A und B im Schnitt ungleiche Temperaturverteilung, die auch zu ungleicher Verformung führt. Diese Verformung besteht einerseits in einer Verdrehung des Rings um seine Umfangsachse, die hier als Stülpung bezeichnet wird. Zum anderen verbiegt sich der Ring um eine Querachse. Die entsprechenden Verformungen der Gleitfläche addieren sich. In einem gegebenen Fall war die Gleitfläche in bezug auf die Ringachse konkav geläppt, so daß sich vom Innenrand (11 und 13) zum Außenrand (12 und 14 in Fig.4) ein Höhenanstieg um 0,5 µ im entspannten Zustand ergab. Im Betriebszustand stülpte sich der Ring im Sinne des Pfeils in Fig.2 im Gleitflächenbereich nach außen, wodurch die Gleitfläche eine Annäherung an die ebene Gestalt erfuhr. Diese war jedoch über den Umfang ungleichmäßig. Durch die Stülpung wich Punkt 12 gegenüber Punkt 11 um 0,8 µ zurück und lag demnach gegenüber der ebenen Gegenfläche gegenüber Punkt 11 um 0,3 µ zurück. Im Bereich A war die Stülpung etwas geringer, nämlich im Punkt 14 gegenüber Punkt 13 nur etwa 0,6 µ, so daß er gegenüber Punkt 13 um 0,1 µ zurücklag. Die Biegung um die Querachse wirkte sich mit 0,2 µ maximal aus. Dies hatte zum Ergebnis, daß die Punkte 11 und 13 etwa in derselben Querebene lagen, während die Punkte 12 und 14 demgegenüber um 0,3 bzw. 0,1 µ zurücklagen.

Dies Ergebnis ist in Fig.5 als Abwicklung näherungsweise dargestellt. Die größere Punktdichte zeigt größere Annäherung an die Gegenfläche an. Im niederdruckseitigen Randstreifen·15 ist die Annäherung am stärksten. In der Mitte des Bereichs A bleibt sie über die Breite (in Radiusrichtung) der Dichtfläche im wesentlichen unverändert. Im Bereich 12 weicht die Dichtfläche im Sinne größeren Abstands von der Gegenfläche zurück. Dazwischen ergeben sich Übergangsbereiche.

Der Gleitring 3 zeigte nach 500 Stunden Betriebszeit schwache Schleifspuren. Der übrige Bereich der Gleitfläche war im wesentlichen unverändert, abgesehen von kleineren Riefen, die auf Fremdkörper zurückzuführen sein können. Daraus läßt sich ableiten, daß in dem Randstreifen 15 Festkörperkontakt auftrat, während im übrigen Bereich hydrodynamische Schmierverhältnisse herrschten, die von der in Fig.5 veranschaulichten Welligkeit herrühren mögen. Die Leckrate betrug in einer kurzen Anfangszeit 0,1 g/h und fiel dann auf gleichbleibend weniger als 0,05 g/h ab.

## Patentansprüche

1. Gleitringdichtung mit zwei Gleitringen (3,4), die einen zu seinem niederdruckseitigen Rand hin sich verengenden Dichtspalt (6) zwischen ihren Gleitflächen einschließen, wobei die relative Formgebung der Gleitflächen und ihre Betriebsverformung derart auf einander abgestimmt sind, daß unter Betriebsbedingungen die eine (10) in ihrem niederdruckseitigen Rand (15) im wesentlichen eben ist und in ihrem druckseitig davon gelegenen Teil des Dichtspalts (6), der mindestens etwa ebenso weit ist wie im Bereich des niederdruckseitigen Randes, eine Umfangswelligkeit aufweist und von denen die andere mindestens in ihrem niederdruckseitigen Rand im wesentlichen eben ist und aus Hartstoff besteht, dadurch gekennzeichnet, daß beide Gleitringe (3,4) aus Hartstoff bestehen, die Weite des Dichtspalts (6) im niederdruckseitigen Rand (15) nicht größer als 0,2µ ist und die Abweichung der Gleitfläche (10) des einen Gleitrings (3) von der ebenen Gestalt in dem niederdruckseitigen Rand (15) nicht größer als 0,1µ ist.

2. Gleitringdichtung nach Anspruch 1, dadurch gekennzeichnet, daß in dem niederdruckseitigen Rand (15) die Abweichungen der zweiten Gleitfläche von der ebenen Form nicht größer als 0,15µ sind.

3. Gleitringdichtung nach Anspruch 1 oder 2, dadurch gekennzeichnet, daß die Spaltweite in denjenigen Bereichen (13, 14), in denen sich die Gleitflächen (10) druckseitig des niederdruckseitigen Rands (15) am nächsten kommen, über den Radius etwa konstant ist.

4. Gleitringdichtung nach einem der Ansprüche 1 bis 3, dadurch gekennzeichnet, daß die größte Spaltweite in dem druckseitig des niederdruckseitigen Rands (15) liegenden Teils des Dichtspalts (6) unter 1 µ, vorzugsweise unter 0,5 µ liegt.

5. Gleitringdichtung nach einem der Ansprüche 1 bis 4, dadurch gekennzeichnet, daß wenigstens einer der beiden Gleitringe (3,4) mit Einrichtungen (7) zur über den Umfang ungleichmäßigen Wärmeabfuhr ausgerüstet ist.

6. Gleitringdichtung nach Anspruch 5, dadurch gekennzeichnet, daß die Einrichtungen zur über den Umfang ungleichmäßigen Wärmeabfuhr sich insgesamt über mindestens etwa ein Drittel und einzeln über je mindestens etwa ein Zehntel des Umfangs erstrecken.

7. Gleitringdichtung nach einem der Ansprüche 1 bis 6, dadurch gekennzeichnet, daß wenigstens einer der beiden Gleitringe (3,4) mit Einrichtungen (8,9) zur über den Umfang ungleichen Abstützung des die Dichtfläche (10) bildenden Ringteils gegenüber der abzudichtenden Druckdifferenz ausgestattet sind

8. Gleitringdichtung nach einem der Ansprüche 1 bis 7, dadurch gekennzeichnet, daß die Umfangswelligkeit mindestens eines der beiden Gleitringe (3) druckseitig des niederdruckseitigen Rands (15) durch Temperatur- und/oder Druckverformung erzielt ist

9. Gleitringdichtung nach einem der Ansprüche 1 bis 8, dadurch gekennzeichnet, daß die betriebliche Druck- und Temperaturverformung gegensinnig wirken.

10. Gleitringdichtung nach einem der Ansprüche 1 bis 9, dadurch gekennzeichnet, daß die Porengröße in der Gleitfläche wenigstens eines der beiden Gleitringe (3,4) geringer als 2 µ ist.

11. Verfahren zum Herstellen einer Gleitringdichtung mit einem Gleitring , der über den Umfang eine ungleiche Wärmeabfuhr bzw. einen ungleichen Druckverformungswiderstand aufweist, dadurch gekennzeichnet, daß der betriebliche Stülpwinkel der Gleitfläche in denjenigen Umfangsbereichen, in denen die Gleitfläche druckseitig der Gegenfläche am nächsten kommt, festgestellt und die Gleitfläche oder die mit ihr zusammenwirkende Gegenfläche etwa diesen Winkel kompensierend vorbearbeitet wird.

12. Verfahren nach Anspruch 11, dadurch gekennzeichnet, daß die außerhalb des niederdruckseitigen Rands angestrebte Umfangswelligkeit durch über den Umfang ungleiche Temperatur- oder Druckverformung hergestellt wird.

## Claims

1. A slide-ring packing with two slide rings (3, 4) which enclose a sealing gap (6) between their sliding surfaces which narrows towards its low-pressure-side edge, the relative shaping of the sliding surfaces and their operational deformation being matched to one another such that, under operating conditions, one (10) is essentially flat at its low-pressure-side edge (15) and has a circumferential ripple in its part situated on the pressure side of the sealing gap (6) which is at least approximately as wide as in the region of the low-pressure-side edge, and the other is essentially flat at its low-pressure-side edge and is composed of hard material, characterized in that both slide rings (3, 4) are composed of hard material, the width of the sealing gap (6) at the low-pressure-side edge (15) is no greater than 0.2 µ and the deviation of the sliding surface (10) of one slide ring (3) from the flat configuration at the low-pressure-side edge (15) is no greater than 0.1 µ.

2. A slide-ring packing according to claim 1, characterized in that the deviations of the second sliding surface from the flat shape at the low-pressure-side edge (15) are no more than 0.15 µ.

3. A slide-ring packing according to claim 1 or 2, characterized in that the gap width in those regions (13, 14), in which the sliding surfaces (10) come closest to the pressure side of the low-pressure-side edge (15) is approximately constant over the radius.

4. A slide-ring packing according to any of claims 1 to 3, characterized in that the greatest gap width in that part of the sealing gap (6) which lies on the pressure side of the low-pressure-side edge (15) is less than 1 µ, preferably less than 0.5 µ.

5. A slide-ring packing according to any of claims 1 to 4, characterized in that at least one of the two slide rings (3, 4) is equipped with means (7) for heat dissipation which is nonuniform over the circumference.

6. A slide-ring packing according to claim 5, characterized in that the means for heat dissipation which is nonuniform over the circumference occupies in total at least approximately one-third and individually at least approximately one-tenth of the circumference.

7. A slide-ring packing according to any of claims 1 to 6, characterized in that at least one of the two slide rings (3, 4) is equipped with means (8, 9) for supporting, in a nonuniform manner over the circumference, that part of the ring which forms the sealing surface (10) in relation to the pressure difference to be sealed off.

8. A slide-ring packing according to any of claims 1 to 7, characterized in that the circumferential ripple of at least one of the two slide rings (3) on the pressure side of the low-pressure-side edge (15) is achieved by thermal and/or pressure-induced deformation.

9. A slide-ring packing according to any of claims 1 to 8, characterized in that the pressure-induced and thermal deformation during operation act in opposite senses.

10. A slide-ring packing according to any of claims 1 to 9, characterized in that the pore size in the sliding surface of at least one of the two slide rings (3, 4) is less than 2 µ.

11. A method for the production of a slide-ring packing with a slide ring which has a heat dissipation which is nonuniform over the circumference or a resistance to pressure-induced deformation which is nonuniform, characterized in that the flexure angle of the sliding surface during operation in those regions of the circumference in which the sliding surface comes closest to the mating surface on the pressure side is predetermined and the sliding surface or the mating surface interacting with it is premachined to compensate approximately for this angle.

12. A method according to claim 11, characterized in that the circumferential ripple desired outside the low-pressure-side edge is produced by thermal or pressure-induced deformation which is nonuniform over the circumference.

## Revendications

1. Garniture d'étanchéité à bagues glissantes, comprenant deux bagues glissantes (3, 4) qui renferment entre leurs surfaces de glissement une fente d'étanchéité (6) se rétrécissant vers son bord côté basse pression, le formage relatif des surfaces de glissement et leur déformation pendant le fonctionnement étant coordonnés de telle sorte qu'en situation de fonctionnement, l'une (10) est essentiellement plane dans son bord côté basse pression (15) et présente dans sa partie côté pression de la fente d'étanchéité (6), laquelle est au moins aussi large qu'au niveau du bord côté basse pression, une ondulation circonférentielle, et l'autre est essentiellement plane au moins dans son bord côté basse pression et est réalisée en matériau dur, caractérisée en ce que les deux bagues glissantes (3, 4) sont en matériau dur, en ce que la largeur de la fente d'étanchéité (6) dans le bord côté basse pression (15) n'est pas supérieure à 0,2 µ et en ce que l'écart de la surface de glissement (10) de l'une (3) des bagues glissantes par rapport à la configuration plane dans le bord côté basse pression (15) n'est pas supérieur à 0,1 µ.

2. Garniture d'étanchéité à bagues glissantes selon la revendication 1, caractérisée en ce que dans le bord côté basse pression (15), les écarts de la deuxième surface de glissement par rapport à la configuration plane ne sont pas supérieurs à 0,15 µ.

3. Garniture d'étanchéité à bagues glissantes selon la revendication 1 ou 2, caractérisée en ce que dans les zones (13, 14), dans lesquelles les surfaces de glissement (10) sur le côté pression du bord côté basse pression (15) se rapprochent le plus, la largeur de la fente est approximativement constante sur le rayon.

4. Garniture d'étanchéité à bagues glissantes selon l'une des revendications 1 à 3, caractérisée en ce que la largeur maximale dans la partie située sur le côté pression du bord côté basse pression (15) de la fente d'étanchéité (6) est inférieure à 1 µ, de préférence inférieure à 0,5 µ.

5. Garniture d'étanchéité à bagues glissantes selon l'une des revendications 1 à 4, caractérisée en ce qu'au moins une des deux bagues glissantes (3, 4) est équipée de dispositifs (7) permettant une dissipation irrégulière de la chaleur sur la circonférence.

6. Garniture d'étanchéité à bagues glissantes selon la revendication 5, caractérisée en ce que les dispositifs permettant une dissipation irrégulière de la chaleur sur la circonférence s'étendent au total sur au moins un tiers environ et individuellement sur au moins un dixième environ de la circonférence.

7. Garniture d'étanchéité à bagues glissantes selon l'une des revendications 1 à 6, caractérisée en ce qu'au moins une des deux bagues glissantes (3, 4) est équipée de dispositifs (8, 9) permettant un appui inégal sur la circonférence de l'élément de bague formant la surface d'étanchéité (10) par rapport à la pression différentielle à rendre étanche.

8. Garniture d'étanchéité à bagues glissantes selon l'une des revendications 1 à 7, caractérisée en ce que l'ondulation circonférentielle d'au moins une (3) des deux bagues glissantes sur le côté pression du bord côté basse pression (15) est obtenue par déformation thermique et/ou déformation sous pression.

9. Garniture d'étanchéité à bagues glissantes selon l'une des revendications 1 à 8, caractérisée en ce que la déformation thermique et/ou la déformation sous pression pendant le fonctionnement agissent en sens inverse.

10. Garniture d'étanchéité à bagues glissantes selon l'une des revendications 1 à 9, caractérisée en ce que la taille des pores dans la surface de glissement d'au moins une des deux bagues glissantes (3, 4) est inférieure à 2µ.

11. Procédé de fabrication d'une garniture d'étanchéité à bague glissante comprenant une bague glissante qui présente sur la circonférence une dissipation inégale de la chaleur resp. une résistance inégale à la déformation sous pression, caractérisé en ce que l'on détermine l'angle de retournement de fonctionnement de la surface de glissement dans celles parmi les zones circonférentielles, dans lesquelles la surface de glissement sur le côté pression se rapproche le plus de la contre-surface, et on travaille au préalable ladite surface de glissement ou la contre-surface qui coopère avec elle, de manière à compenser approximativement cet angle.

12. Procédé selon la revendication 11, caractérisé en ce que l'on réalise l'ondulation circonférentielle que l'on cherche à obtenir en dehors du bord côté basse pression, par déformation thermique ou déformation sous pression inégale sur la circonférence.
